# EUROPÄISCHE PATENTSCHRIFT

(11) **EP 4 017 693 B1**
(45) Veröffentlichungstag und Bekanntmachung des Hinweises auf die Patenterteilung: **27.12.2023**
(21) Anmeldenummer: 20756890.8
(22) Anmeldetag: 20.08.2020
(51) Int. Cl.: B29B 9/06, B29C 48/00, B29C 48/05, B01J 2/20, B29C 48/04

(54) **UNTERWASSERGRANULATIONSANLAGE, UND DARAUF BEZOGENES VERFAHREN ZUM GRANULIEREN EINER POLYMERSCHMELZE**
UNDERWATER GRANULATION SYSTEM, AND METHOD RELATING THERETO FOR GRANULATING A POLYMER MELT
SYSTÈME DE GRANULATION SOUS L'EAU, ET PROCÉDÉ S'Y RAPPORTANT POUR LA GRANULATION D'UNE MASSE FONDUE DE POLYMÈRE

(30) Priorität: 20.08.2019 EP 19192481
(43) Veröffentlichungstag der Anmeldung: 29.06.2022
(73) Patentinhaber: BASF SE, 67056 Ludwigshafen am Rhein (DE)
(72) Erfinder: FREESE, Michael, 49448 Lemförde (DE); KAMINSKY, Torben, 49448 Lemförde (DE)
(74) Vertreter: BASF IP Association
(86) Internationale Anmeldenummer: PCT/EP2020/073339
(87) Internationale Veröffentlichungsnummer: WO 2021/032840

(56) Entgegenhaltungen:
- EP-A1- 0 124 505
- EP-A1- 3 501 773
- DE-A1-102013 018 239
- DE-A1-102013 020 316
- DE-A1-102013 020 317
- US-A- 3 981 959
- US-A- 4 564 350

## Beschreibung

Die vorliegende Erfindung betrifft eine Unterwassergranulationsanlage, insbesondere eine Unterwasser-Mikrogranulationsanlage, mit einer Wasserbox, einer Lochplatte mit mehreren Durchgangsöffnungen zum Zuführen von Polymerschmelze in die Wasserbox, einem Schneidplattenträger, der um eine Drehachse in einer Schneidrichtung rotatorisch angetrieben in der Wasserbox angeordnet ist, wobei der Schneidplattenträger mehrere Schneidplatten aufweist, die der Lochplatte zugewandt und dazu eingerichtet sind, Partikel von der durch die Lochplatte eintretenden Polymerschmelze abzutrennen, und die Wasserbox zum Wärmeabtransport und zum Abtransport der abgetrennten Partikel aus der Wasserbox an eine Wasserversorgung angeschlossen ist, wobei die Wasserbox relativ zu der Drehachse einen hohlzylindrischen Abschnitt aufweist, in dem mehrere umfänglich verteilte Wassereinlässe angeordnet sind.

Granulationsanlagen der vorstehend bezeichneten Art sind allgemein bekannt. Sie werden dazu verwendet, Kunststoffe, insbesondere Polymere wie beispielsweise thermoplastische Polyurethane oder Zwischenprodukte für die Herstellung solcher Stoffe zu entsprechenden Granulaten zu verarbeiten. Die Granulate werden ihrerseits für industrielle Verfahren verwendet. Häufig werden die Granulate in der Weiterverarbeitung erneut aufgeschmolzen, sofern sie nicht direkt für bestimmte Aufgaben zur Anwendung kommen. DE 10 2013 018 239 A1 betrifft eine Granuliervorrichtung. Aus DE 10 2013 020 316 A1 ist ein Verfahren zur Herstellung von Granulatkörnern aus einem Schmelzenmaterial bekannt.

DE 10 2013 020 317 A1 betrifft eine Vorrichtung und ein Verfahren zum Granulieren von Schmelzenmaterial. Aus EP 0 124 505 A1 ist eine Vorrichtung zur Herstellung von Granulatkörnern aus Kunststoffschmelzen bekannt. EP 3 501 773 A1 betrifft eine Granuliervorrichtung und Verfahren zum Granulieren von Materialsträngen. US 3,981,959 betrifft ein Pelletierverfahren.

Für die Weiterverarbeitbarkeit und je nach Einsatzgebiet für die direkte Anwendung der Granulate wird bei der Herstellung, d.h. Granulation, üblicherweise darauf geachtet, dass Granulate in einer vorbestimmten Partikelgröße und mit möglichst homogener Form hergestellt werden können. Für bestimmte Anwendungsfälle ist es beispielsweise gewünscht, möglichst ebenförmige, der Kugelform nahekommende Partikel zu verwenden. In anderen Anwendungsfällen ist es wünschenswert möglichst feine Granulate (sogenannte Mikrogranulate) herstellen zu können. Je homogener die Form des Granulats, desto besser ist dessen Schüttfähigkeit in der Weiterverarbeitung.

Zum Zuführen der Polymerschmelze in die Wasserbox weist die Anlage üblicherweise ein Polymerschmelzanschluss zum Zuführen fließender Polymerschmelze auf, wobei die Lochplatte derart zwischen der Wasserbox und dem Polymerschmelzanschluss installiert ist, dass die Zuführung der Polymerschmelze durch die Lochplatte hindurch in die Wasserbox strömt.

Nach dem Abtrennen der Partikel von der Polymerschmelze durch die Schneidpatten werden diese in der Wasserbox vom zugeführten Wasser erfasst, abgekühlt und aus der Wasserbox heraustransportiert.

Nachdem das zu granulierende Polymer in einen geschmolzenen Zustand überführt worden ist, ist beobachtet worden, dass je nach Material die Schmelze eine teils hohe Klebrigkeit aufweist. Diese Klebrigkeit kann dazu führen, dass die abgetrennten Partikel in der Wasserbox der Unterwassergranulationsanlage vor dem ausreichenden Abkühlen und Verfestigen aneinander haften bleiben oder sich an Anlagenteilen anhaften. Dies beeinträchtigt die Form und Größe der erzeugten Partikel und sorgt potentiell für eine stärkere Verschmutzung der Anlage, was kürzere Wartungszyklen und damit höhere Kosten im Betrieb der Unterwassergranulationsanlage verursacht. Im äußersten Fall ist es gar nicht erst möglich die Anlage zu betreiben, da die Partikel zu stark agglomerieren.

Der Erfindung lag folglich die Aufgabe zugrunde, die vorstehend beschriebenen Nachteile möglichst weitgehend zu überwinden. Insbesondere lag der Erfindung die Aufgabe zugrunde, eine Unterwassergranulationsanlage der eingangs bezeichneten Art dahingehend zu verbessern, dass die Homogenität der erzeugten Granulat-Partikel verbessert wird. Insbesondere lag der Erfindung die Aufgabe zugrunde, die vorstehend bezeichnete Unterwassergranulationsanlage dahingehend zu verbessern, dass Aneinanderhaften der Partikel aneinander und deren Deformation nach dem Abtrennen vermindert werden.

Die Erfindung löst die ihr zugrundeliegende Aufgabe bei einer Unterwassergranulationsanlage der eingangs bezeichneten Art in einem ersten Aspekt mit den Merkmalen des unabhängigen Anspruchs 1.

Die Erfindung macht sich gemäß dem ersten Aspekt die Erkenntnis zunutze, dass durch eine Aufteilung der Wasserzufuhr auf mehrere Wasserauslässe über den Umfang der Wasserbox, und durch Abnahme des Wassers aus der Wasserbox über mehrere umfänglich verteilte Wasserauslässe eine deutlich verbesserte Wasserzirkulation in der Wasserbox erreicht wird. Die Aufenthaltszeit der abgetrennten Partikel in der Wasserbox wird hierdurch deutlich vermindert, und die Partikel sind somit über einen deutlich geringeren Zeitraum dem Risiko ausgesetzt, durch Kollision aneinanderzuhaften oder deformiert zu werden, sodass auch die Homogenität der Partikel verbessert wird.

In einer bevorzugten Weiterbildung sind die Wassereinlässe in einer gemeinsamen Ebene, die senkrecht zur Drehachse angeordnet ist, angeordnet, und vorzugsweise gleichmäßig über den Umfang der Wasserbox verteilt. Alternativ oder zusätzlich sind die Wasserauslässe vorzugsweise in einer gemeinsamen Ebene, die zur Drehachse senkrecht ist, angeordnet und vorzugsweise gleichmäßig über den Umfang der Wasserbox verteilt. In einer weiter bevorzugten Ausführungsform sind die Ebene der Wassereinlässe und die Ebene der Wasserauslässe parallel zueinander geordnet und voneinander beabstandet. In einer weiter bevorzugten Ausführungsform münden die Wassereinlässe und/oder die Wasserauslässe außermittig in die Wasserbox, beziehungsweise aus der Wasserbox, vorzugsweise um den jeweils gleichen Betrag, und sind weiter vorzugsweise tangential beziehungsweise tangentenparallel ausgerichtet. Durch die außermittige, und vorzugsweise gleichmäßig außermittige Anordnung der Wassereinlässe wird die Erzeugung eines Strudels innerhalb der Wasserbox begünstigt, der ein zügigeres Abtransportieren der abgetrennten Partikel von der Lochplatte aus dem Schneidraum ermöglicht. Durch das außermittige Anordnen der Wasserauslässe wird dieser erzeugte Strudel verbessert aufgenommen, und das Abführen der Partikel aus der Wasserbox verbessert.

In einer weiteren bevorzugten Ausführungsform sind die Wassereinlässe relativ zu der Drehachse derart außermittig ausgerichtet, dass sie einen Wasserwirbel in Schneidrichtung erzeugen. Auch wenn durch die Relativgeschwindigkeit zwischen dem Wasser und dem Schneidplattenträger, also in der Schneidrichtung, tendenziell Verwirbelungen zwischen den Wassereinlässen und den Schneidplatten entstehen, halten sich die zu erwartenden negativen Effekte infolge der Verwirbelungen durch den gleichen Drehsinn von Wasser und Schneidplattenträger dennoch in Grenzen. Dadurch entstehen weniger Partikelkollisionen in der Wasserbox.

In einer weiter bevorzugten Ausführungsform sind die Wassereinlässe in Richtung der Ebene der Wasserauslässe geneigt, vorzugsweise derart, dass jeweils ein Wassereinlass im Wesentlichen fluchtend auf einen Wasserauslass ausgerichtet ist, wobei weiter vorzugsweise die derart einander zugeordneten Wasserein- und Auslässe relativ zueinander um etwa eine Viertelumdrehung um die Drehachse verdreht sind. Es wird also durch das Ausrichten der Wassereinlässe und Wasserauslässe aufeinander ein Wasserwirbel derart gezielt ausgebildet, dass das Wasser strömungsgünstig von den Wasserauslässen aufgenommen werden kann. In einer weiter bevorzugten Ausführungsform sind die Wasserauslässe, beziehungsweise ist die Ebene der Wasserauslässe, näher an dem Schneidplattenträger angeordnet, als die Wassereinlässe beziehungsweise die Ebene der Wassereinlässe. Hierdurch findet die Wirbelstrombildung im Wesentlichen "im Rücken" des Schneidplattenträgers statt, so dass die abgetrennten Partikel nur mäßigen Scherkräften ausgesetzt sind und nach dem Abtrennen vom Schneidraum dennoch direkt in die Wasserauslässe hineingezogen werden können, ohne erst noch an den Wassereinlässen vorbeiströmen zu müssen. Auch dies trägt zu einer Reduktion der Aufenthaltszeit der Partikel in der Wasserbox bei.

In einer weiter bevorzugten Ausführungsform weist die Wasserbox eine erste Flanschhülse auf, an der die Wassereinlässe vorgesehen sind, und eine zweite Flanschhülse, an der die Wasserauslässe vorgesehen sind, wobei vorzugsweise die beiden Flanschhülsen fluiddicht und reversibel lösbar miteinander verbunden sind. Durch diesen modularen Aufbau der Wasserbox wird ein schneller Austausch und eine schnelle Modifikation der Einlass- und Auslassgeometrien möglich, um anwendungsspezifisch ein ideales Fluidströmungsverhalten in der Wasserbox erzeugen zu können, angepasst an die jeweils verwendete Lochplatte und den jeweils verwendeten Schneidplattenträger. Auch zu Wartungszwecken ist dieser modulartige Aufbau zu bevorzugen.

Gemäß einer Ausführungsform weist der Schneidplattenträger einen Nabenabschnitt und mehrere Trägerarme aufweist, die an dem Nabenabschnitt ein erstes Ende aufweisen, und sich von dem Nabenabschnitt aus bogenförmig gekrümmt nach außen zu einem ersten Ende erstreckt, wobei die Schneidplatten an dem zweiten Ende der Trägerarme befestigt sind. Die bogenförmige Krümmung soll in diesem Zusammenhang so verstanden werden, dass sowohl ein vollständig bogenförmiger Verlauf des Trägerarms, als auch ein lediglich abschnittsweise bogenförmiger Verlauf umfasst ist. Der Trägerarm ist folglich mindestens abschnittsweise gekrümmt ausgebildet, kann aber auch ungekrümmte, gerade Abschnitte aufweisen.

Die Ausführungsform macht sich die Erkenntnis zunutze, dass der Schneidplattenträger mit seinen Trägerarmen, die sich vom Nabenabschnitt aus bogenförmig nach außen erstrecken, deutlich weniger Turbulenzen erzeugt, als vorbekannte Schneidplattenträger, die üblicherweise aus massiven Scheiben oder scheibenartigen Fräskörpern bestanden. Dadurch, dass die Schneidplatten an voneinander getrennten Trägerarmen ausgebildet sind, kann in die Wasserbox eintretendes Wasser zwischen den Trägerarmen hindurch strömen bis zur Lochplatte. Hierdurch wird der Abtransport der abgetrennten Partikel verbessert. Je besser die Partikel von der Lochplatte nach dem Abtrennen abtransportiert werden können, desto geringer ist das Risiko ihrer Anhaftung aneinander oder an Teilen der Anlage, wodurch wiederum die Homogenität der Partikel verbessert wird..

Die Erfindung wird vorteilhaft weitergebildet, indem der Nabenabschnitt einen Außendurchmesser aufweist, und die Länge der Trägerarme in radialer Richtung, bezogen auf die Drehachse, jeweils größer ist als der Durchmesser des Nabenabschnitts. Vorzugsweise wird der Außendurchmesser an einer Stelle bestimmt, die benachbart zu den Trägerarmen angeordnet ist, oder zwischen zwei benachbarten Trägerarmen. Maßgeblich ist jeweils der größte Außendurchmesser am Nabenabschnitt.

In einer bevorzugten Ausführungsform ragen die Trägerarme von dem Nabenabschnitt aus bezogen auf die Drehachse axial in Richtung der Lochplatte hervor, sodass das zweite Ende der Trägerarme mit dem Schneidplatten näher an der Lochplatte angeordnet ist als das erste Ende. Weiter vorzugsweise sind die Trägerarme endseitig an dem Nabenabschnitt angeordnet. Durch diese beiden Maßnahmen, und vorzugsweise durch deren Kombination, wird ein freies Volumen zwischen den Schneidplattenträger und der Lochplatte bzw. den Schneidplatten definiert, in welchem ebenfalls wiederum ein besserer Wasserfluss möglich ist als in vorbekannten Anlagen. Der Bereich zwischen den Schneidplattenträger und der Lochplatte, auch bezeichnet als Schneidraum, kann deshalb besser durchströmt werden, wodurch wiederum der Abtransport der abgetrennten Partikel erleichtert wird.

In einer weiteren bevorzugten Ausführungsform sind die Trägerarme zumindest abstandsweise bogenförmig in axialer Richtung gekrümmt, bezogen auf die Drehachse. Die bogenförmige Krümmung des Trägerarmes sorgt für vergleichsweise geringe Störungen in der Wasserströmung innerhalb der Wasserbox, weil scharfe Krümmungen durch die Bogenform weitgehend vermieden werden können.

Alternativ oder zusätzlich zu einer Krümmung in axialer Richtung sind die Trägerarme in bevorzugten Ausführungsformen entgegen der Schneidrichtung zumindest abschnittsweise derart gekrümmt, dass die Schneidplatten in Trägerarmen bei Rotationen des Schneidplattenträgers in der Schneidrichtung nachlaufen. Dies ist so zu verstehen, dass die Trägerarme sich, betrachtet in einer Ebene senkrecht zur Drehachse infolge der zumindest abschnittsweisen Krümmung vom ersten Ende aus zunächst radial erstrecken, dann aber umso weiter entgegen der Schneidrichtung von der radialen Linie abweichen, je näher man zum zweiten Ende der Trägerarme kommt.

Besonders bevorzugt sind die Trägerarme sowohl in axialer Richtung wie auch in Umfangsrichtung entgegen der Schneidrichtung wie vorstehend beschrieben gekrümmt. Besonders bevorzugt werden stetige, sprungfreie Übergänge zwischen gekrümmten und nicht gekrümmten Abschnitten gewählt oder eine kontinuierliche, durchgehende Krümmung, um wiederum Turbulenzen weitest möglich mindern.

In einer weiteren bevorzugten Ausführungsform weisen die Trägerarme jeweils eine Armdicke auf, die von dem ersten Ende aus in Richtung des zweiten Endes hin zumindest abschnittsweise, vorzugsweise kontinuierlich, abnimmt. Auch hierdurch wird wiederum der freie, nicht von dem Schneidplattenträger belegte Raum in der Wasserbox erhöht.

In einer weiteren bevorzugten Ausführungsform, in der die Schneidplatten an den Trägerarmen jeweils mittels einer Befestigungsschraube reversibel lösbar angebracht sind, ist die Befestigungsschraube in montiertem Zustand vollständig versenkt angeordnet. Hierzu ist vorzugsweise in den Schneidplatten und in den Trägerarmen eine entsprechende Ausnehmung eingebracht, in der einerseits die Schneidplatten, andererseits die Befestigungsschrauben versenkt angeordnet werden. Es hat sich gezeigt, dass ein guter Teil der im Stand der Technik beobachteten ungewünschten Deformationen der Partikel durch Kollision der Partikel mit vorstehenden Artefakten in der Wasserbox erzeugt wurde.

Hierzu zählen auch die Befestigungsschrauben, die bei vorbekannten Anlagen üblicherweise mit ihren Schraubenköpfen von dem Schneidplatten beziehungsweise von den Schneidplatten vorstanden. Durch Einlassen der Schraubenköpfe in das Material des Trägerarms beziehungsweise der Schneidplatte wird das Maß der Deformation der Partikel überraschend stark gesenkt.

Es ist in bevorzugten Ausführungsformen sowohl das direkte Verschrauben der Schneidplatten mit dem Trägerarm möglich, wie auch das Verschrauben der Schneidplatten mittels einer indirekten Verschraubung über Madenschrauben und Spannhebel. Durch das Versenken der Schraubenköpfe ist es streng genommen unerheblich, ob die Verschraubung von der Seite her vorgenommen wird, die der Lochplatte zugewandt ist, oder von einer der anderen Seiten her. Zur Vermeidung von Turbulenzen wird es allerdings als besonders vorteilhaft angesehen, die Ausnehmung für die Aufnahmen der Befestigungsschraube auf derjenigen Seite anzuordnen, die der Lochplatte zugewandt ist.

In einer weiteren bevorzugten Ausführungsform weisen die Trägerarme an ihrem zweiten Ende jeweils eine Ausnehmung zur Aufnahme jeweils einer Schneidplatte auf, wobei die Ausnehmung derart angeordnet ist, dass sich die Schneidplatte bei Antrieb in der Drehrichtung in der Ausnehmung gegen den jeweiligen Trägerarm abstützt. Hierdurch wird eine verbesserte Kraftüberleitung von Schneidplatte in den Trägerarm erreicht.

Weiter vorzugsweise weist die Ausnehmung eine Kontur und eine Tiefe auf, die der Dicke der aufgenommenen Schneidplatte derart angepasst sind, dass die Schneidplatte bündig mit der Oberfläche des Trägerarms abschließt. Zumindest wird auch der Oberflächenübergang zwischen Schneidplatte und Trägerarm strömungsgünstig gestaltet und auch diesbezügliches Risiko von Kollisionen der abgetrennten Partikel mit scharfen Kanten innerhalb der Wasserbox weiter vermindert.

In einer weiteren bevorzugten Ausführungsform weisen die Schneidplatten eine Schneidkante auf, und ausgehend von der Schneidkante eine erste, der Lochplatte zugewandte Fläche, sowie eine zweite von der Lochplatte abgewandte Fläche, wobei die Schneidkanten in Drehrichtung vorstehend angeordnet sind und wobei die zweite Fläche relativ zu der Drehachse geneigt ist, vorzugsweise in einem Winkelbereich von 5 - 25°, besonders bevorzugt in einem Bereich von 12 -18°. Mit anderen Worten spannen die erste und zweite Fläche vorzugsweise einen spitzen Winkel miteinander auf. Weiter vorzugsweise ist die erste Fläche parallel zu der Ebene der Lochplatte ausgerichtet. Durch den Winkel stellt die zweite Fläche in Verbindung mit dem spitzen Winkel und der in Drehrichtung vorstehenden Schneidkante eine Abschrägung nach hinten - also entgegen der Drehrichtung - dar, und die abgetrennten Partikel werden entlang der zweiten Fläche vorteilhaft unmittelbar nach hinten abtransportiert und können schnell aus dem Schneidraum entfernt werden.

In bevorzugten alternativen Ausgestaltungen weist der Schneidplattenträger 4,6 8 oder mehr Trägerarme auf. Die Anzahl der Trägerarme wird vorzugsweise in Abhängigkeit des zur Verfügung stehenden Platzes in der Wasserbox und der erforderlichen Fertigungskapazität der Unterwassergranulationsanlage gewählt.

Die Erfindung wurde vorstehend anhand eines ersten Aspekts in Bezug auf die Unterwassergranulationsanlage beschrieben. In einem zweiten Aspekt betrifft die Erfindung ferner ein Verfahren nach dem unabhängigen Anspruch 14 zum Granulieren einer Polymerschmelze unter Wasser umfassend die Schritte:
- Zuführen einer Polymerschmelze zu einer Wasserbox, indem die Polymerschmelze durch in einer Lochplatte vorgesehene Durchgangsöffnungen hindurchgefördert wird,
- Rotieren eines Schneidplattenträgers in einer Schneidrichtung um eine Drehachse in der Wasserbox, so dass Partikel von der Polymerschmelze abgetrennt werden und ein Granulat gebildet wird, und
- Erzeugen einer Wasserströmung in einem hohlzylindrischen Abschnitt relativ zu der Drehachse mittels mehrerer umfänglich verteilter Wassereinlässe und mehrerer umfänglich verteilter Wasserauslässe in der Wasserbox derart, dass Wärmeenergie und abgetrennte Partikel aus der Wasserbox abtransportiert werden.

Die Erfindung betrifft somit gleichermaßen auch eine Verwendung nach dem unabhängigen Anspruch 15 der vorstehend beschriebenen Unterwassergranulationsanlage zum Granulieren einer Polymerschmelze unter Wasser.

Die Vorteile und bevorzugten Ausführungsformen der Unterwassergranulationsanlage gemäß dem ersten Aspekt sind zugleich bevorzugte Ausführungsformen und Vorteil des Verfahrens gemäß dem zweiten Aspekt und umgekehrt, weswegen zur Vermeidung von Wiederholungen auf die obigen Ausführungen verwiesen wird.

Die Erfindung wird nachfolgend anhand eines bevorzugten Ausführungsbeispiels unter Bezugnahme auf die beigefügten Figuren näher beschrieben. Hierbei zeigen:
- Fig. 1: Eine schematische Darstellung einer Unterwassergranulationsanlage gemäß dem Stand der Technik,
- Fig. 2a-d: Verschiedene schematische Darstellungen einer Granulationsanlage gemäß dem bevorzugten Ausführungsbeispiel,
- Fig. 3a, b: Schematische Schnittdarstellungen zu Fig. 2b,
- Fig. 4: Eine schematische räumliche Ansicht einer Detailausführung der Granulationsanlage gemäß in Fig. 2a-d,
- Fig. 5: Eine Detailansicht eines Schneidplattenträgers in der Anordnung gemäß Fig. 2b,
- Fig. 6: Eine schematische Draufsicht auf den Schneidplattenträger gemäß Fig. 5 in einer anderen Orientierung, und
- Fig. 7a, b: Schematische Detaildarstellungen des Schneidplattenträgers gemäß Fig. 5 und 6, beziehungsweise der Unterwasser-Granulationsanlage gemäß den Fig. 2a-d.

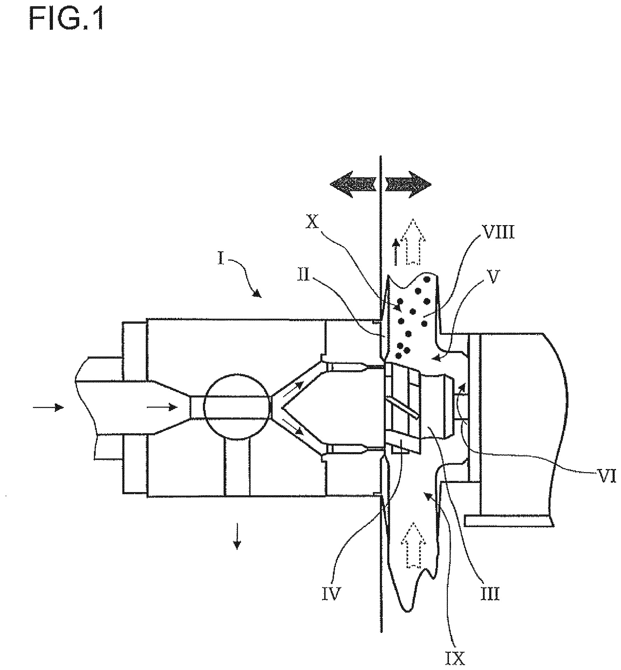

Um den grundsätzlichen Aufbau auch der erfindungsgemäßen Granulationsanlage zu erläutern, wird zunächst eine konventionelle Unterwasser-Granulationsanlage gezeigt. In Fig. 1 ist eine Unterwasser-Granulationsanlage gemäß dem Stand der Technik dargestellt. Diese weist einen ersten Bereich I auf, in dem eine Polymerschmelze auf eine vorbestimmte Temperatur erhitzt wird und mittels mehrere Verteilerkanäle einer Lochplatte II zugeführt wird. Die Lochplatte II weist eine Mehrzahl von Durchgangsöffnungen auf, durch die die Polymerschmelze in eine Wasserbox V eintritt. In der Wasserbox V ist ein Schneidplattenträger III angeordnet, der rotatorisch in einer Schneidrichtung VI um seine Drehachse herum angetrieben wird. Durch die Rotation in der Schneidrichtung VI wird eine Vielzahl von Schneidplatten IV an der Lochplatte II entlang bewegt, wodurch Partikel VIII von der Polymerschmelze abgetrennt werden. Die Partikel VIII erkalten in der Wasserbox V aufgrund des darin geführten Wassers. Das Wasser in der Wasserbox V wird durch einen Wassereinlass IX zugeführt, durchströmt die Wasserbox vertikal aufsteigend und wird durch einen Wasserauslass IX abgeführt. Die Partikel VIII werden von dem Wasserstrom mitgerissen und verlassen die Wasserbox V.

Der grundsätzliche Aufbau der Unterwassergranulationsanlage gemäß der Erfindung ist bis zur Lochplatte im Wesentlichen dem Vorbild des Stands der Technik nachempfunden, weswegen zur Vermeidung von Wiederholungen auf die obigen Darstellungen zur Fig. 1 verwiesen wird. Die Unterwassergranulationsanlage gemäß den weiteren Figuren 1 gemäß der Erfindung weist angrenzend zu der (nicht dargestellten) Lochplatte eine Wasserbox 3 auf, die vorzugsweise als hohlzylindrische Kammer ausgebildet ist. In der Wasserbox 3 ist ein Schneidplattenträger 5 angeordnet, der von einer Antriebswelle 7 in einer Schneidrichtung S rotatorisch um eine Drehachse X angetrieben wird. Die Antriebswelle 7 ist aus der Wasserbox 3 herausgeführt und weist an ihrem dem Schneidplattenträger 5 abgewandten Ende eine Kupplungsschnittstelle 9 auf, die zum Anschluss an einem motorischen Antrieb ausgebildet ist.

Die Wasserbox weist mehrere Wassereinlässe 11 auf, die über den Umfang verteilt an der Wasserbox 3 angeordnet sind. Die Wasserbox 3 weist ferner mehrere Auslässe 13 auf, die ebenfalls über den Umfang, vorzugsweise gleichmäßig, verteilt angeordnet sind.

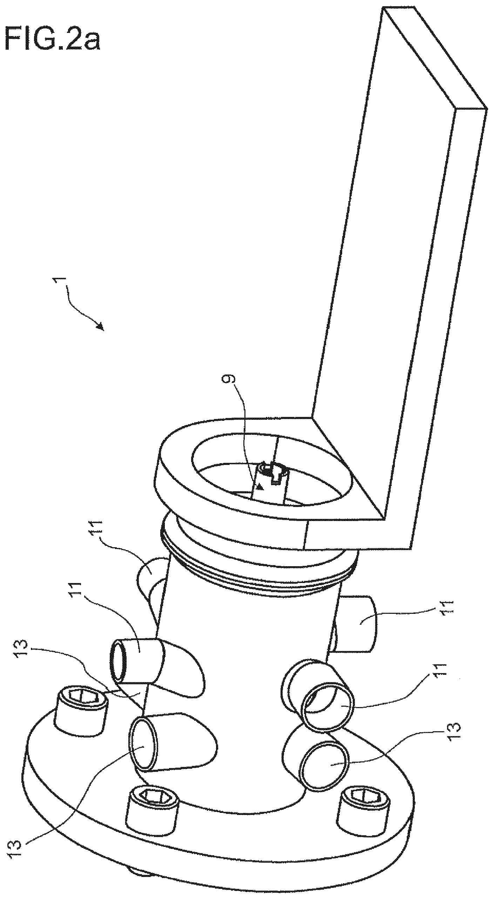

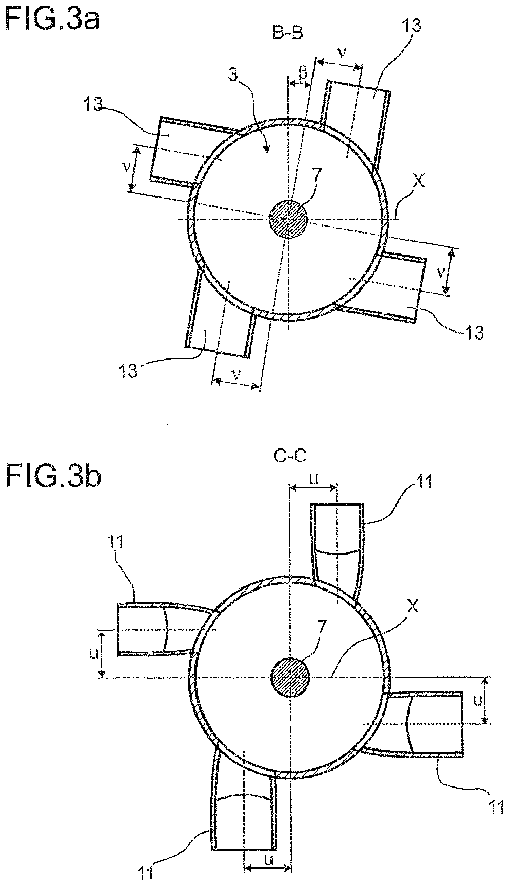

Wie sich aus den Fig. 2a-d und 3a, b ergibt sind die Wassereinlässe 11 gemeinsam in einer ersten Ebene E1, Schnittebene C-C, angeordnet, während die Wasserauslässe 13 gemeinsam in einer von der ersten Ebene E1 beabstandeten und zu dieser parallelen Ebene E2, Schnitt B-B angeordnet sind. Die Ebene der Wasserauslässe E2 ist näher an der Ebene der Lochplatte, Schnitt A-A, angeordnet als die Ebene E1 der Wassereinlässe 11.

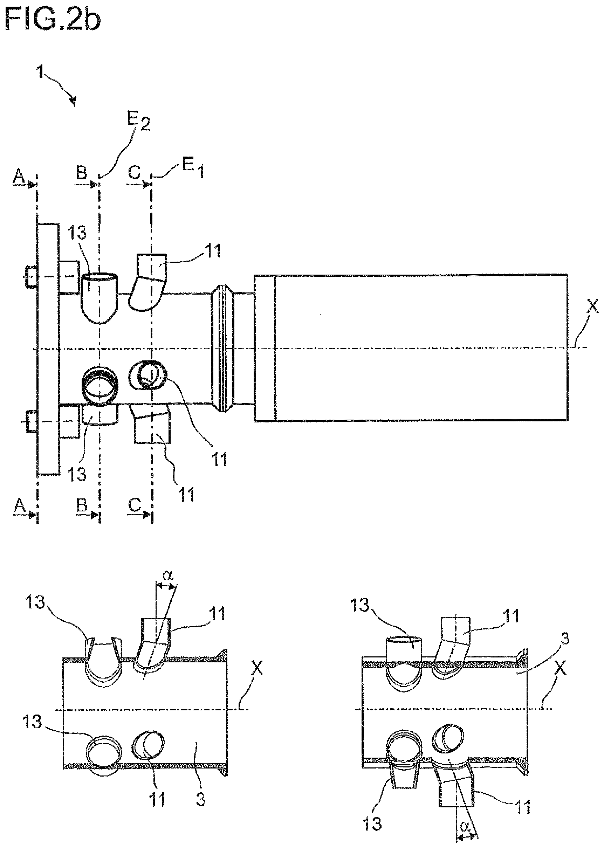

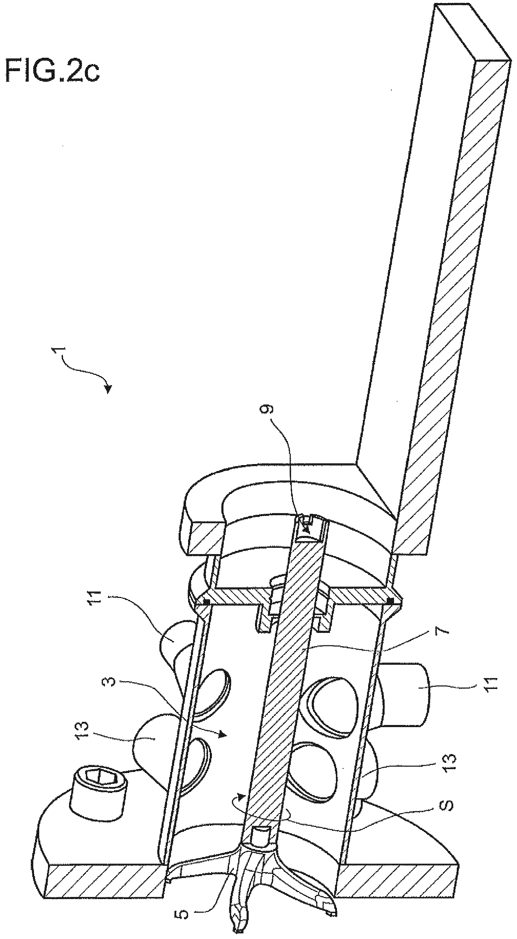

Wie sich ferner anhand der Fig. 2a, c und 3a, b nachvollziehen lässt, sind die Wassereinlässe 11 jeweils um den gleichen Betrag u außermittig angeordnet, bezogen auf eine von der Drehachse x ausgehende Radiallinie. Aufgrund dieser außermittigen Anordnung sind die Wassereinlässe 11 prinzipiell als Tangentialeinlässe ausgebildet, beziehungsweise tangentenparallel ausgerichtet. Sie sind derart positioniert, dass eine Wirbelströmung im Inneren der Wasserbox 3 erzeugt wird. Wie ferner insbesondere in Fig. 2b zu erkennen ist, sind die Wassereinlässe 11 nicht nur außermittig angeordnet, sondern sie sind ferner in Richtung der zweiten Ebene E2, in welcher sich die Wasserauslässe 13 befinden, geneigt angeordnet, und zwar um einen Winkel α. Durch diese Neigung sind sie im Wesentlichen auf jeweils denjenigen Wasserauslass 13 ausgerichtet, der jeweils um eine Viertelumdrehung gedreht ist (um die Drehachse X).

Die Wasserauslässe 13 in der Ebene E2 sind im Wesentlichen senkrecht zur Drehachse X ausgerichtet, und wie die Wassereinlässe 11 auch um einen jeweils gleichen Betrag v von einer Radialen durch die Drehachse X versetzt. Auch sie sind somit tangentenparallel ausgerichtet und außermittig an der Wasserbox 3 angeschlossen. Dies führt zu einer verbesserten Abführung aus der Wasserbox 3 mit den abgetrennten Partikeln. Relativ zu den Wassereinlässen 11 in der Ebene E1 sind die Wasserauslässe 13 in der Ebene E2 um einen vorbestimmten Winkel β um die Drehachse X versetzt angeordnet.

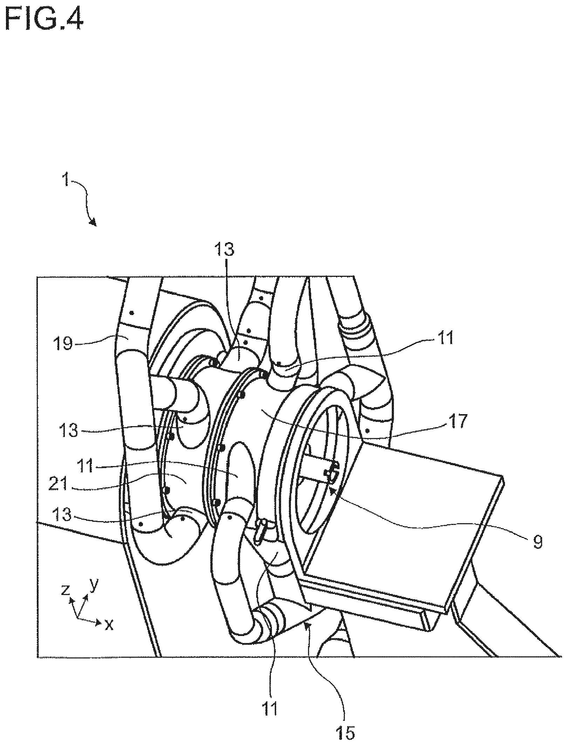

Bis hier wurde im Wesentlichen die Anordnung der Wasserein- und auslässe 11, 13 der Unterwassergranulationsanlage 1 beschrieben. Fig. 4 zeigt prinzipiell eine Möglichkeit des Anschlusses der Wasserein- und auslässe 11,13 sowie eine mögliche Detailkonstruktion der Wasserbox 3.

So ist in Fig. 4 gezeigt, dass die Wassereinlässe 11 über eine externe Verrohrung angeschlossen sind, die einen Wassereinlassverteiler 13 darstellt und fluidleitend mit einer Kühlwasserquelle verbunden ist.

Die Wassereinlässe 11 sind als Einlassstutzen an einer ersten Flanschhülse 17 angeordnet.

Die Wasserauslässe 13 sind über einen Wasserauslassverteiler 19 zusammengeführt. Je nach Anlagentyp ist es vorgesehen, das Kühlmedium in einen Kreislauf zu führen, und die Auslassseite nach Herausfiltern der Partikel wieder der Kühlwasserquelle zuzuführen.

Die Auslässe 13 sind als Auslassstutzen an einer zweiten Flanschhülse 21 angeordnet. Die erste und zweite Flanschhülse 17, 21 sind vorzugsweise unmittelbar miteinander fluiddicht und reversibel lösbar verbunden, um eine modulare Wasserbox 3 bereitzustellen.

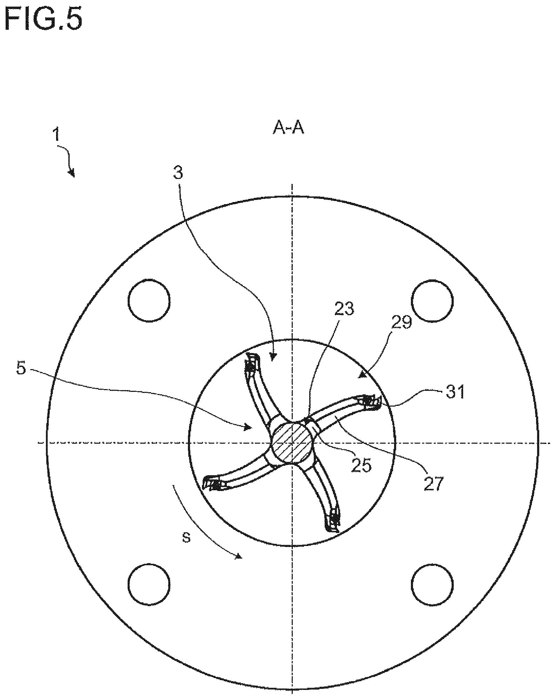

Die Figuren 5 - 7b widmen sich vorrangig der Geometrie des Schneidplattenträgers 5 und der Schneidplatten 31. Der Schneidplattenträger 5 ist in eingebautem Zustand als Draufsicht in Ebene A-A (vgl. Figur 2b) gewissermaßen von der Lochplatte her abgebildet. Der Schneidplattendreher 5 weist einen Nabenabschnitt 23 auf, an dem mit einem ersten Ende 25 eine Mehrzahl von Trägerarmen 27 ausgebildet sind. Die Trägerarme erstrecken sich von dem ersten Ende 25 bogenförmig nach außen bis zu einem zweiten Ende 29, an dem jeweils eine Schneidplatte 31 befestigt ist. Gezeigt ist im bevorzugten Ausführungsbeispiel ein Schneidplattenträger 5 mit insgesamt vier Trägerarmen mit daran angeordneten Schneidplatten 31. Es sind aber erfindungsgemäß ebenso möglich angepasst jeweils an die Erfordernisse der Fertigungskapazität und an die Lochplatte, Schneidplattenträger mit einer abweichenden Anzahl Trägerarme zu verwenden, beispielsweise 6, 8 oder mehr als 8 Trägerarme.

Figur 5 zeigt bereits, dass die Trägerarme 27 dem Schneidplattenträger 5 insgesamt zu einer sehr volumensparenden Bauform verhelfen, so dass ein Großteil des Querschnitts der Wasserbox 3 im Bereich der Trägerarme 27 frei bleibt und von Wasser durchströmt werden kann.

Die Trägerarme 27 sind entgegen der Schneidrichtung S zumindest abschnittsweise bogenförmig gekrümmt. Dadurch laufen die Schneidplatten 31 bei Antrieb des Schneidplattenträgers 5 zumindest einem Teil der Trägerarme 27 um einen kleinen Betrag nach. Dies begünstigt zum einen das Abscherverhalten der Partikel von der durch die Lochplatte durchtretenden Polymerschmelze und zum anderen die Strömungsverhältnisse in der Wasserbox 3.

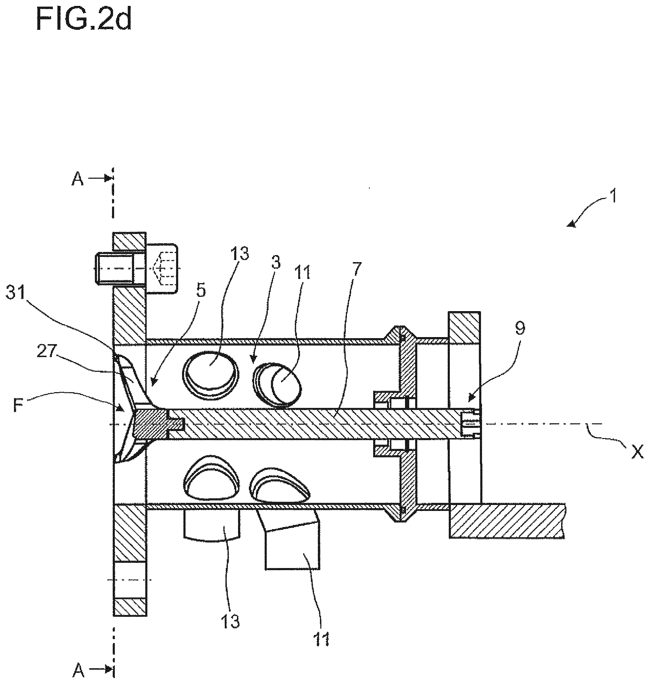

Zusätzlich zu der in Fig. 5 im Detail gezeigten Krümmung entgegen der Schneidrichtung S sind die Trägerarme 27 endseitig derart an dem Nabenabschnitt 23 des Schneidplattenträgers 5 angeordnet, dass sie vom Schneidplattenträger 5 aus in Richtung der Lochplatte hervorragen, siehe insbesondere Fig. 2d. Optional sind die Trägerarme 27 auch in Richtung der Drehachse X zumindest abschnittsweise gekrümmt ausgebildet. Durch das Hervorragen in axialer Richtung schaffen die Trägerarme 27 zwischen dem Schneidplattenträger 5 und der Lochplatte (Ebene A-A) einen Freiraum F (vgl. Figur 2d) der es den abgetrennten Partikeln ermöglicht, schneller und behinderungsärmer in Richtung der Wasserauslässe 13 abgefördert zu werden.

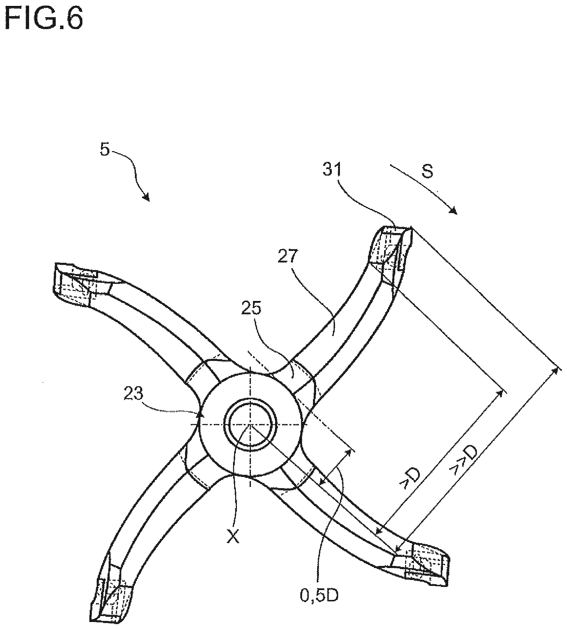

Die Größenverhältnisse der Trägerarme relativ zum Nabenabschnitt des Schneidplattenträgers 5 werden anhand von Fig. 6 näher erläutert. Der Nabenabschnitt 5 hat einen Außendurchmesser D im Bereich des ersten Endes 25 der Trägerarme 27. Die Trägerarme 27 haben eine Dicke, die auch an der dicksten Stelle noch kleiner ist, als der Durchmesser D des Nabenabschnitts 25. Zugleich haben die Trägerarme 27 eine Länge in radialer Richtung, ausgehend von der Drehachse X, die deutlich größer ist, als der Durchmesser D. Nimmt man die Abmessungen der Trägerarme 27 samt der Schneidplatten 31 als Bezugsgrößen, ist die Länge der Trägerarme 27 noch einmal größer. Vorzugsweise liegt die Länge der Trägerarme in einem Bereich von 1,5 x Durchmesser D des Nabenabschnitts 23, oder mehr.

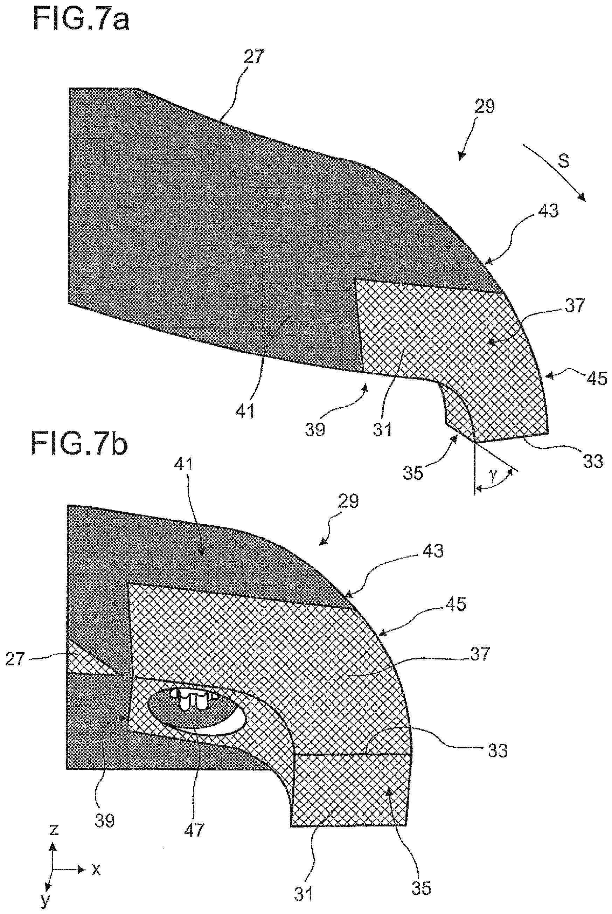

In Fig. 7a wird die Integration der Schneidplatten 31 in die Trägerarme 27 näher erläutert. Die Schneidplatte 31 weist eine Schneidkante 33 auf, die in Drehrichtung S von der Schneidplatte, beziehungsweise vom zweiten Ende 29 des Trägerarms 27 vorsteht. Dies wird dadurch erreicht, dass die Schneidkante 33 einen spitzen Winkel γ zwischen einer ersten Fläche 35, die der Lochplatte zugewandt ist, und einer zweiten Fläche 37 aufspannt, welche der Lochplatte abgewandt ist. Entlang dem Rücken der Schneidkante 33, also quasi entlang der zweiten Fläche 37, können die abgetrennten Partikel unmittelbar nach hinten in Richtung der Auslässe 13 abgleiten.

Die Schneidplatte 31 ist in eine Ausnehmung 39 eingelassen, welche am zweiten Ende 29 des Trägerarms 27 ausgebildet ist. Die Ausnehmung 39 ist in ihrer Tiefe und Breite so definiert, dass die zweite Fläche 37 bündig mit einer korrespondierenden Oberfläche 41 benachbart zu der Ausnehmung 39 abschließt. An dem radial äußeren Ende des zweiten Endes 29 des Trägerarms 27 ist eine konvex gekrümmte Oberfläche 43 ausgebildet, welche ebenfalls dergestalt von der Ausnehmung 39 durchsetzt wird, dass sich die Geometrie der Schneidplatte 31 an einer radial äußeren Oberfläche 45 der Schneidplatte 31 bündig fortsetzt. Durch die Integration der Schneidplatte 31 in den Trägerarm 27 in dieser Art und Weise wird wiederum ein günstiger Strömungsverlauf des Wassers entlang des Schneidplattenträgers 5 begünstigt.

Fig. 7b zeigt den Trägerarm 27 aus Fig. 7a in einer Ansicht von der Lochplatte her. Der Blick ist nun insbesondere freigegeben auf eine Befestigungsschraube 47, die derart in die Schneidplatte 31 und den Trägerarm 27 eingelassen ist, dass ihr Schraubenkopf vollständig im Material versenkt ist, und nicht aus der Schneidplatte 31 beziehungsweise dem Trägerarm 27 vorsteht. Der potentielle Kollisionsherd mit abgetrennten Partikeln ist hierdurch vermieden. Da sich die Schneidplatte 31 ferner in der Ausnehmung 39 abstützt, ist die Anbindung der Schneidplatte 31 an den Trägerarm 27 auch hoch belastbar und langzeitstabil angeordnet.

## Patentansprüche

1. Unterwassergranulationsanlage, mit
einer Wasserbox (3),
einer Lochplatte mit mehreren Durchgangsöffnungen zum Zuführen von Polymerschmelze in die Wasserbox (3),
einem Schneidplattenträger (5), der um eine Drehachse (X) in einer Schneidrichtung (5) rotatorisch angetrieben in der Wasserbox (3) angeordnet ist,
wobei der Schneidplattenträger (5) mehrere Schneidplatten (31) aufweist, die der Lochplatte zugewandt und dazu eingerichtet sind, Partikel von der durch die Lochplatte eintretenden Polymerschmelze abzutrennen, und
die Wasserbox (3) zum Wärmeabtransport und zum Abtransport der abgetrennten Partikel aus der Wasserbox (3) an eine Wasserversorgung angeschlossen ist,
wobei die Wasserbox (3) relativ zu der Drehachse (X) einen hohlzylindrischen Abschnitt aufweist, in dem mehrere umfänglich verteilte Wassereinlässe (11) angeordnet sind,
**dadurch gekennzeichnet, dass** in dem hohlzylindrischen Abschnitt mehrere umfänglich verteilte Wasserauslässe (13) angeordnet sind.

2. Unterwassergranulationsanlage nach Anspruch 1,
wobei die Wassereinlässe (11) in einer gemeinsamen zur Drehachse senkrechten Ebene (E1) angeordnet und, vorzugsweise gleichmäßig, über den Umfang der Wasserbox (3) verteilt sind, und/oder
wobei die Wasserauslässe (13) in einer gemeinsamen zur Drehachse senkrechten Ebene (E2) angeordnet und, vorzugsweise gleichmäßig, über den Umfang der Wasserbox (3) verteilt sind.

3. Unterwassergranulationsanlage nach Anspruch 2,
wobei die Ebene (E1) derWassereinlässe und die Ebene (E2) derWasserauslässe parallel zueinander und voneinander beabstandet sind.

4. Unterwassergranulationsanlage nach einem der vorstehenden Ansprüche,
wobei die Wassereinlässe und/oder Wasserauslässe außermittig in die Wasserbox münden, vorzugsweise um den jeweils gleichen Betrag (u,v), und weiter vorzugsweise tangential bzw. tangentenparallel ausgerichtet sind,
wobei vorzugsweise die Wassereinlässe relativ zu der Drehachse derart außermittig ausgerichtet sind, dass die einen Wasserwirbel in Schneidrichtung erzeugen.

5. Unterwassergranulationsanlage nach einem der vorstehenden Ansprüche,
wobei die Wassereinlässe in Richtung der Ebene der Wasserauslässe geneigt sind, vorzugsweise derart, dass jeweils ein Wassereinlass im Wesentlichen fluchtend auf einen Wasserauslass ausgerichtet ist, wobei weiter vorzugsweise die derart einander zugeordneten Wasserein- und Auslässe relativ zueinander um etwa eine Viertelumdrehung um die Drehachse verdreht sind.

6. Unterwassergranulationsanlage nach einem der vorstehenden Ansprüche,
wobei die Wasserauslässe näher an dem Schneidplattenträger angeordnet sind als die Wassereinlässe.

7. Unterwassergranulationsanlage nach einem der vorstehenden Ansprüche,
wobei die Wasserbox eine erste Flanschhülse (17) aufweist, an der die Wassereinlässe vorgesehen sind, und eine zweite Flanschhülse (19), an der die Wasserauslässe vorgesehen sind, wobei vorzugsweise die beiden Flanschhülsen fluiddicht und reversibel lösbar miteinander verbunden sind.

8. Unterwassergranulationsanlage (1) nach einem der vorstehenden Ansprüche,
wobei die Schneidplatten (31) dazu eingerichtet sind, die Partikel mittels Abscheren zu bilden, und
der Schneidplattenträger (5) einen Nabenabschnitt (23) und mehrere Trägerarme (27) aufweist, die an dem Nabenabschnitt (23) ein erstes Ende (25) aufweisen, und sich von dem Nabenabschnitt (23) aus bogenförmig gekrümmt nach außen zu einem zweiten Ende (29) erstrecken, wobei die Schneidplatten (31) an dem zweiten Ende (29) der Trägerarme (27) befestigt sind,
insbesondere wobei der Nabenabschnitt einen Außendurchmesser (D) aufweist, und die Länge der Trägerarme in radialer Richtung, bezogen auf die Drehachse, jeweils größer ist als der Durchmesser des Nabenabschnitts.

9. Unterwassergranulationsanlage nach Anspruch 8,
wobei die Trägerarme von dem Nabenabschnitt aus bezogen auf die Drehachse axial in Richtung der Lochplatte hervorragen, so dass das zweite Ende der Trägerarme mit den Schneidplatten näher an der Lochplatte angeordnet ist als das erste Ende,
wobei vorzugsweise die Trägerarme zumindest abschnittsweise bogenförmig gekrümmt sind.

10. Unterwassergranulationsanlage nach einem der Ansprüche 8 oder 9,
wobei die Trägerarme entgegen der Schneidrichtung zumindest abschnittsweise derart gekrümmt sind, dass die Schneidplatten den Trägerarmen bei Rotation des Schneidplattenträgers in Schneidrichtung nachlaufen.

11. Unterwassergranulationsanlage nach einem der Ansprüche 7 bis 10,
wobei die Trägerarme jeweils eine Armdicke aufweisen, die von dem ersten Ende aus in Richtung des zweiten Endes hin zumindest abschnittsweise, vorzugsweise kontinuierlich, abnimmt, und/oder
wobei die Schneidplatten an den Trägerarmen jeweils mittels einer Befestigungsschraube reversibel lösbar angebracht sind, wobei die Befestigungsschraube in montiertem Zustand vollständig versenkt angeordnet ist.

12. Unterwassergranulationsanlage nach einem der Ansprüche 7 bis 11,
wobei die Trägerarme an ihrem zweiten Ende jeweils eine Ausnehmung (39) zur Aufnahme jeweils einer Schneidplatte aufweisen, wobei die Ausnehmung derart angeordnet ist, dass sich die Schneidplatte bei Antrieb in der Drehrichtung in der Ausnehmung gegen den jeweiligen Trägerarm abstützt,
wobei vorzugsweise die Ausnehmung eine Kontur und eine Tiefe aufweist, die der Dicke der aufgenommenen Schneidplatte derart angepasst sind, dass die Schneidplatte bündig mit einer Oberfläche (41, 43) des Trägerarms abschließt.

13. Unterwassergranulationsanlage nach einem der vorstehenden Ansprüche,
wobei die Schneidplatten eine Schneidkante (33) aufweisen, und ausgehend von der Schneidkante eine erste, der Lochplatte zugewandte Fläche (35), sowie eine zweite, von der Lochplatte abgewandte Fläche (37) aufweist, wobei die Schneidkante in Drehrichtung vorstehend angeordnet ist, und wobei die zweite Fläche relativ zu der Drehachse geneigt ist, vorzugsweise in einem Winkelbereich von 5° bis 25°, besonders bevorzugt in einem Bereich von 12° bis 18°.

14. Verfahren zum Granulieren einer Polymerschmelze unter Wasser mittels einer Granulationsanlage nach einem der vorstehenden Ansprüche,
umfassend die Schritte:
- Zuführen einer Polymerschmelze zu einer Wasserbox (3), indem die Polymerschmelze durch in einer Lochplatte vorgesehene Durchgangsöffnungen hindurchgefördert wird,
- Rotieren eines Schneidplattenträgers (5) in einer Schneidrichtung (5) um eine Drehachse (X) in der Wasserbox (3), so dass Partikel von der Polymerschmelze abgetrennt werden und ein Granulat gebildet wird, und
- Erzeugen einer Wasserströmung in einem hohlzylindrischen Abschnitt relativ zu der Drehachse (X) mittels mehrerer umfänglich verteilter Wassereinlässe (11) und mehrerer umfänglich verteilter Wasserauslässe (13) in der Wasserbox (3) derart, dass Wärmeenergie und abgetrennte Partikel aus der Wasserbox (3) abtransportiert werden.

15. Verwendung einer Granulationsanlage zum Granulieren einer Polymerschmelze unter Wasser, wobei die Granulationsanlage nach einem der Ansprüche 1 bis 13 ausgebildet ist.

## Claims

1. An underwater granulation system having
a water box (3),
a perforated plate with multiple through-openings for feeding polymer melt into the water box (3),
a cutting plate support (5) which is arranged in the water box (3) so as to be driven in rotation about an axis of rotation (X) in a cutting direction (5), wherein the cutting plate support (5) has multiple cutting plates (31) which face the perforated plate and are adapted to separate particles from the polymer melt entering through the perforated plate, and
the water box (3) is connected to a water supply for heat evacuation and for evacuating the separated particles from the water box (3),
wherein the water box (3) has a hollow cylindrical portion relative to the axis of rotation (X), in which multiple water inlets (11) distributed over the circumference are arranged,
wherein multiple water outlets (13) distributed over the circumference are arranged in the hollow cylindrical portion.

2. The underwater granulation system according to claim 1,
wherein the water inlets (11) are arranged in a common plane (E1) perpendicular to the axis of rotation and are distributed, preferably evenly, over the circumference of the water box (3), and/or
wherein the water outlets (13) are arranged in a common plane (E2) perpendicular to the axis of rotation and are distributed, preferably evenly, over the circumference of the water box (3).

3. The underwater granulation system according to claim 2,
wherein the plane (E1) of the water inlets and the plane (E2) of the water outlets are parallel to one another and spaced apart from one another.

4. The underwater granulation system according to one of the preceding claims,
wherein the water inlets and/or water outlets open into the water box eccentrically, preferably in each case by the same amount (u, v), and further preferably are oriented tangentially, or tangentially parallel,
wherein the water inlets are preferably oriented eccentrically relative to the axis of rotation such that they generate a whirlpool in the cutting direction.

5. The underwater granulation system according to one of the preceding claims,
wherein the water inlets are inclined in the direction of the plane of the water outlets, preferably such that in each case a water inlet is oriented substantially in alignment with a water outlet, wherein further preferably the water inlets and outlets so associated with one another are rotated relative to one another by approximately a quarter turn about the axis of rotation.

6. The underwater granulation system according to one of the preceding claims,
wherein the water outlets are arranged closer to the cutting plate support than the water inlets.

7. The underwater granulation system according to one of the preceding claims,
wherein the water box has a first flanged sleeve (17), on which the water inlets are provided, and a second flanged sleeve (19), on which the water outlets are provided, wherein the two flanged sleeves are preferably connected to one another in a fluid-tight and reversibly releasable manner.

8. The underwater granulation system (1) according to one of the preceding claims,
wherein the cutting plates (31) are adapted to form the particles by means of shearing, and
the cutting plate support (5) has a hub portion (23) and multiple carrier arms (27) which have a first end (25) at the hub portion (23) and extend outwards from the hub portion (23) in an arcuately curved manner to a second end (29), wherein the cutting plates (31) are fastened to the second end (29) of the carrier arms (27),
in particular wherein the hub portion has an outside diameter (D), and the length of the carrier arms in the radial direction, relative to the axis of rotation, is in each case larger than the diameter of the hub portion.

9. The underwater granulation system according to claim 8,
wherein the carrier arms project axially, relative to the axis of rotation, from the hub portion in the direction of the perforated plate, so that the second end of the carrier arms having the cutting plates is arranged closer to the perforated plate than the first end,
wherein the carrier arms are preferably arcuately curved at least in some portions.

10. The underwater granulation system according to either of claims 8 and 9,
wherein the carrier arms are curved contrary to the cutting direction at least in some portions, such that the cutting plates are behind the carrier arms on rotation of the cutting plate support in the cutting direction.

11. The underwater granulation system according to one of claims 7 to 10,
wherein the carrier arms each have an arm thickness which decreases from the first end in the direction of the second end at least in some portions, preferably continuously, and/or
wherein the cutting plates are each reversibly releasably attached to the carrier arms by means of a fastening screw, wherein the fastening screw is arranged so that it is fully recessed in the mounted state.

12. The underwater granulation system according to one of claims 7 to 11,
wherein the carrier arms each have at their second end a recess (39) for receiving a cutting plate in each case, wherein the recess is so arranged that the cutting plate, when driven in the direction of rotation, is supported in the recess against the respective carrier arm,
wherein the recess preferably has a contour and a depth which are so adapted to the thickness of the received cutting plate that the cutting plate is flush with a surface (41, 43) of the carrier arm.

13. The underwater granulation system according to one of the preceding claims,
wherein the cutting plates have a cutting edge (33) and, starting from the cutting edge, a first face (35) facing the perforated plate and a second face (37) facing away from the perforated plate, wherein the cutting edge is arranged so as to project in the direction of rotation, and wherein the second face is inclined relative to the axis of rotation, preferably in an angle range from 5° to 25°, particularly preferably in a range from 12° to 18° .

14. A method for granulating a polymer melt under water by means of a granulation system according to one of the preceding claims,
comprising the steps:
- feeding a polymer melt to a water box (3) by conveying the polymer melt through through-openings provided in a perforated plate,
- rotating a cutting plate support (5) about an axis of rotation (X) in a cutting direction (5) in the water box (3), so that particles are separated from the polymer melt and granules are formed, and
- generating a flow of water in a hollow cylindrical portion relative to the axis of rotation (X) by means of multiple water inlets (11) distributed over the circumference and multiple water outlets (13) distributed over the circumference in the water box (3), such that thermal energy and separated particles are evacuated from the water box (3).

15. The use of a granulation system for granulating a polymer melt under water, wherein the granulation system is configured according to one of claims 1 to 13.

## Revendications

1. Système de granulation sous eau, comprenant
une boîte à eau (3),
une plaque perforée ayant une pluralité d'ouvertures traversantes pour l'amenée de polymère fondu dans la boîte à eau (3),
un support de plaque de coupe (5), qui est agencé dans la boîte à eau (3) en étant entraîné en rotation autour d'un axe de rotation (X) dans une direction de coupe (5), le support de plaque de coupe (5) comprenant une pluralité de plaques de coupe (31) qui font face à la plaque perforée et qui sont conçues pour séparer des particules du polymère fondu entrant à travers la plaque perforée, et
la boîte à eau (3) est raccordée à une alimentation en eau pour évacuer la chaleur et pour évacuer les particules séparées de la boîte à eau (3),
la boîte à eau (3) présentant, par rapport à l'axe de rotation (X), une section cylindrique creuse dans laquelle sont agencées une pluralité d'entrées d'eau (11) réparties sur la circonférence,
**caractérisé en ce qu'**une pluralité de sorties d'eau (13) réparties sur la circonférence sont agencées dans la section cylindrique creuse.

2. Système de granulation sous eau selon la revendication 1,
dans lequel les entrées d'eau (11) sont agencées dans un plan commun (E1) perpendiculaire à l'axe de rotation et sont réparties, de préférence uniformément, sur la périphérie de la boîte à eau (3), et/ou
dans lequel les sorties d'eau (13) sont agencées dans un plan commun (E2) perpendiculaire à l'axe de rotation et sont réparties, de préférence uniformément, sur la circonférence de la boîte à eau (3).

3. Système de granulation sous eau selon la revendication 2,
dans lequel le plan (E1) des entrées d'eau et le plan (E2) des sorties d'eau sont parallèles l'un à l'autre et espacés l'un de l'autre.

4. Système de granulation sous eau selon l'une des revendications précédentes,
dans lequel les entrées d'eau et/ou les sorties d'eau débouchent de manière excentrée dans la boîte à eau, de préférence de la même valeur (u, v), et sont en outre de préférence orientées de manière tangentielle ou parallèle à la tangente,
les entrées d'eau étant de préférence excentrées par rapport à l'axe de rotation de manière à créer un tourbillon d'eau dans la direction de coupe.

5. Système de granulation sous eau selon l'une des revendications précédentes,
dans lequel les entrées d'eau sont inclinées en direction du plan des sorties d'eau, de préférence de telle sorte que chaque entrée d'eau soit sensiblement alignée avec une sortie d'eau, les entrées et sorties d'eau ainsi associées étant, de préférence encore, tournées les unes par rapport aux autres d'environ un quart de tour autour de l'axe de rotation.

6. Système de granulation sous eau selon l'une des revendications précédentes,
dans lequel les sorties d'eau sont situées plus près du support de plaque de coupe que les entrées d'eau.

7. Système de granulation sous eau selon l'une des revendications précédentes,
dans lequel la boîte à eau comprend un premier manchon à bride (17) sur lequel sont prévues les entrées d'eau et un deuxième manchon à bride (19) sur lequel sont prévues les sorties d'eau, les deux manchons à bride étant de préférence reliés l'un à l'autre de manière étanche aux fluides et de manière réversiblement détachable.

8. Système de granulation sous eau (1) selon l'une des revendications précédentes,
dans lequel les plaques de coupe (31) sont conçues pour former les particules par cisaillement, et
le support de plaque de coupe (5) comprend une partie de moyeu (23) et une pluralité de bras de support (27) ayant une première extrémité (25) au niveau de la partie de moyeu (23) et s'étendant vers l'extérieur à partir de la partie de moyeu (23) selon une courbe arquée vers une deuxième extrémité (29), les plaques de coupe (31) étant fixées à la deuxième extrémité (29) des bras de support (27),
en particulier dans lequel la partie de moyeu présente un diamètre extérieur (D), et la longueur des bras de support dans la direction radiale, par rapport à l'axe de rotation, est respectivement plus grande que le diamètre de la partie de moyeu.

9. Système de granulation sous eau selon la revendication 8,
dans lequel les bras de support font saillie axialement de la partie de moyeu par rapport à l'axe de rotation en direction de la plaque perforée, de sorte que la deuxième extrémité des bras de support avec les plaques de coupe est agencée plus près de la plaque perforée que la première extrémité,
de préférence, les bras de support étant courbés en forme d'arc au moins par sections.

10. Système de granulation sous eau selon l'une des revendications 8 ou 9,
dans lequel les bras de support sont courbés au moins par sections dans le sens opposé à la direction de coupe, de telle sorte que les plaques de coupe suivent les bras de support lors de la rotation du support de plaques de coupe dans la direction de coupe.

11. Système de granulation sous eau selon l'une des revendications 7 à 10,
dans lequel les bras de support présentent chacun une épaisseur de bras qui diminue au moins par sections, de préférence en continu, à partir de la première extrémité en direction de la deuxième extrémité, et/ou
dans lequel les plaques de coupe sont montées de manière amovible et réversible sur chacun des bras de support au moyen d'une vis de fixation, la vis de fixation étant entièrement encastrée à l'état monté.

12. Système de granulation sous eau selon l'une des revendications 7 à 11,
dans lequel les bras de support présentent chacun à leur deuxième extrémité un évidement (39) destiné à recevoir chacun une plaque de coupe, l'évidement étant agencé de telle sorte que la plaque de coupe, lorsqu'elle est entraînée dans le sens de rotation, s'appuie dans l'évidement contre le bras de support correspondant,
l'évidement présentant de préférence un contour et une profondeur qui sont adaptés à l'épaisseur de la plaque de coupe reçue de telle sorte que la plaque de coupe se termine en étant en affleurement avec une surface (41, 43) du bras de support.

13. Système de granulation sous eau selon l'une des revendications précédentes,
dans lequel les plaques de coupe présentent une arête de coupe (33) et, à partir de l'arête de coupe, une première surface (35) tournée vers la plaque perforée, ainsi qu'une deuxième surface (37) opposée à la plaque perforée, l'arête de coupe étant agencée en saillie dans le sens de rotation, et la deuxième surface étant inclinée par rapport à l'axe de rotation, de préférence dans une gamme angulaire allant de 5° à 25°, de manière particulièrement préférée dans une gamme allant de 12° à 18°.

14. Procédé de granulation d'un polymère fondu sous eau au moyen d'un système de granulation selon l'une des revendications précédentes,
comprenant les étapes suivantes :
- alimentation d'un polymère fondu vers une boîte à eau (3) en faisant passer le polymère fondu à travers des ouvertures traversantes prévues dans une plaque perforée,
- faire tourner un support de plaque de coupe (5) dans une direction de coupe (5) autour d'un axe de rotation (X) dans la boîte à eau (3), de sorte que des particules soient séparées du polymère fondu et que des granulés soient formé, et
- générer un écoulement d'eau dans une partie cylindrique creuse par rapport à l'axe de rotation (X) au moyen d'une pluralité d'entrées d'eau (11) réparties circonférentiellement et d'une pluralité de sorties d'eau (13) réparties circonférentiellement dans la boîte à eau (3), de telle sorte que l'énergie thermique et les particules séparées soient évacuées de la boîte à eau (3) .

15. Utilisation d'un système de granulation pour granuler un polymère fondu sous eau, le système de granulation étant conçu selon l'une des revendications 1 à 13.
